(19) Europäisches Patentamt / European Patent Office / Office européen des brevets

(11) **EP 4 336 151 B1**

(12) **EUROPEAN PATENT SPECIFICATION**

(45) Date of publication and mention
of the grant of the patent:
**29.01.2025 Bulletin 2025/05**

(21) Application number: **22382841.9**

(22) Date of filing: **12.09.2022**

(51) International Patent Classification (IPC):
*G01F 15/00* (2006.01)     *G01F 1/00* (2022.01)

(52) Cooperative Patent Classification (CPC):
**G01F 1/00; G01F 15/00**

(54) **NANOMECHANICAL MASS FLOW METER AND CONTROLLER DEVICE, METHOD, AND ASSOCIATED USES THEREOF**

NANOMECHANISCHER MASSENDURCHFLUSSMESSER UND STEUERUNGSVORRICHTUNG, VERFAHREN UND ZUGEHÖRIGE VERWENDUNGEN DAVON

DÉBITMÈTRE MASSIQUE NANOMÉCANIQUE ET DISPOSITIF DE COMMANDE, PROCÉDÉ ET UTILISATIONS ASSOCIÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.03.2024 Bulletin 2024/11**

(73) Proprietor: **Consejo Superior de Investigaciones Científicas (CSIC)**
**28006 Madrid (ES)**

(72) Inventors:
- **CALLEJA GÓMEZ, Montserrat**
  **28760 Tres Cantos (ES)**
- **SAN PAULO HERNANDO, Álvaro**
  **28760 Tres Cantos (ES)**
- **KOSAKA MONTEIRO, Priscila**
  **28760 Tres Cantos (ES)**
- **TAMAYO DE MIGUEL, Francisco Javier**
  **28760 Tres Cantos (ES)**
- **ESCOBAR ALCÓN, Javier Enrique**
  **28760 Tres Cantos (ES)**
- **MOLINA FERNÁNDEZ, Juan**
  **28760 Tres Cantos (ES)**
- **GIL SANTOS, Eduardo**
  **28760 Tres Cantos (ES)**

- **MALVAR VIDAL, Óscar**
  **28760 Tres Cantos (ES)**
- **RUZ MARTÍNEZ, José Jaime**
  **28760 Tres Cantos (ES)**

(74) Representative: **Temiño Ceniceros, Ignacio**
**Abril Patentes y Marcas, S.L.**
**Calle Zurbano, 76 - 7°**
**28010 Madrid (ES)**

(56) References cited:
GB-A- 1 302 096     US-A- 4 041 768
US-A1- 2022 274 072     US-B2- 9 395 343

- ROBERT A. BARTON ET AL: "Fabrication of a Nanomechanical Mass Sensor Containing a Nanofluidic Channel", NANO LETTERS, vol. 10, no. 6, 9 June 2010 (2010-06-09), US, pages 2058 - 2063, XP055336772, ISSN: 1530-6984, DOI: 10.1021/nl100193g
- SHIA-YEN TEH ET AL: "Droplet microfluidics", LAB ON A CHIP, ROYAL SOCIETY OF CHEMISTRY, UK, vol. 8, no. 2, 1 January 2008 (2008-01-01), pages 198 - 220, XP002619583, ISSN: 1473-0197, [retrieved on 20080111], DOI: 10.1039/B715524G

## Description

## FIELD OF THE INVENTION

The present invention lies within the technical field of microfluidics. More specifically, the invention relates to a nanomechanical mass flow meter and controller device for precise quantitative control of liquid transport in open nanofluidic systems, a method of real-time mass flow measurement and control using said device, and associated uses thereof.

## BACKGROUND OF THE INVENTION

The precise manipulation of liquids at the micro and nanoscales is a key issue in several scientific fields, including cell biology, chemistry, engineering, and printing or patterning. Closed systems (i.e., channels, nozzles, or tubes) are mainly used for handling fluids at the submillimeter scale. However, due to their confined geometry, said fluidic systems pose several technical challenges, such as high flow resistance and propensity to clogging and bubble-driven flow perturbation [Dong et al (2013). ACS Nano, 7 (11), 10371-10379; Teh et al (2008). Lab Chip, 8 (2), 198-220; Rossi et al (2004). Nano Lett., 4 (5), 989-993].

Open fluidic systems are consolidating as an alternate technological approach for the detection and manipulation of very small volumes due to lower hydrodynamic resistance, simplicity of fabrication, ease in cleaning, accessibility for liquid handling and increased gas bubbles elimination. Characterized by having, at least, one area of the device open to air, these systems are capable of transporting liquid droplets directionally by gradient in shape, gradient in surface wettability or DC/AC voltage application, enabling self-driven liquid flow with exceptionally large liquid/channel volume ratios. Among them are flexible fiber arrays [Duprat et al (2012). Nature, 482 (7386), 510-513], rigid nanowires [Huang et al (2013). Nat. Nanotechnol., 8 (4), 277-281], spider silks [Ju et al. (2014). Acc. Chem. Res., 47(8), 2342-2352], cactus spines [Ju et al (2012). Nat. Commun., 3 (1), 1-6], and conical wires [Wang et al (2014). ACS nano, 8(9), 8757-8764].

Despite some degree of qualitative control of liquid transport in open fluidic systems, precise quantitative control is currently limited by the difficulty to provide precise flow measurements. So far, flow measurements are mostly based on the estimation of volume changes of liquid droplets acting as initial reservoirs or being involved in the transport itself, through diverse imaging techniques [Shin, J. H. et al (2019). R. Soc. Open Sci., 6(2), 180657; He, M. et al. (2018). Adv. Funct. Mater., 28(49), 1800187; Hwal Shin, J. et al. (2015). Sci. Rep., 5(1), 1-9; Huang, J. Y. et al (2013). Nat. Nanotechnol., 8 (4), 277-281; Li, K. et al (2013). Nat. Commun., 4(1), 1-7]. Besides the limitations concerning accuracy, these estimations are useless for the development of compact integrated devices and instruments that fully exploit the functional potential of open fluidic systems.

Document US 9 395 343 B2 refers to a nanomechanical mass flow meter and controller device.

The present invention proposes a solution to the technical problem mentioned above, by means of a nanomechanical mass flow meter and controller device that allows real-time measurement and control of mass flow in open nanofluidic systems.

## BRIEF DESCRIPTION OF THE INVENTION

A first object of the present invention relates to a nanomechanical mass flow meter and controller device for open nanofluidic systems comprising:

- a mechanical resonator sensor comprising receiving means adapted for receiving a mass of conducting liquid disposed thereon, wherein said mechanical resonator sensor possesses at least one mechanical vibration mode selectable in one or more working frequencies;
- selecting means adapted for selecting a working frequency corresponding to one mechanical vibration mode of the mechanical resonator sensor; and,
- monitoring means adapted for monitoring the mechanical spectra of the coupled system conformed by the mass of conducting liquid and the mechanical resonator sensor.

Advantageously, the device of the invention further comprises:

- a reservoir adapted for containing the mass of conducting liquid;
- positioning means adapted for adjusting the relative position of the reservoir with respect to the receiving means; and,
- dispensing means adapted for dispensing the mass of conducting liquid contained in the reservoir on the receiving means, through the application of a voltage between the reservoir and the receiving means.

Within the scope of interpretation of the present invention, the expression "conducting liquid" will be understood as any liquid solution that contains ions (i.e., atoms or small groups of atoms that have a positive or negative electrical charge). Examples of conducting liquids are any type of salt dissolved in water and ionic liquids (that is, molten salts originated from the association of organic cations and organic/inorganic anions).

In a preferred embodiment of the device of the invention, the mechanical resonator sensor comprises a cantilever resonator attached to a nanowire, or a nanowire resonator. In both cases, the nanowire acts as receiving means. Preferably, the nanowire resonator or the nanowire attached to the cantilever resonator comprises a metal or a semiconductor material and, more preferably, silicon (Si), germanium (Ge), silicon carbide (SiC), indium arsenide (InAs), indium phosphide (InP), gallium arsenide (GaAs), gallium phosphide (GaP), indium antimonide (InSb), gallium antimonide (GaSb), gallium nitride (GaN), indium nitride (InN), aluminum nitride (AIN), or any combination thereof.

In another preferred embodiment of the device of the invention, the reservoir comprises a support made of a conductive material, preferably, gold or platinum-iridium.

In yet another preferred embodiment of the device of the invention, the reservoir is adapted for containing one or more droplets of an ionic liquid. Preferably, said ionic liquid comprises:

- 1,2-dimethyl-3-propylimidazolium bis(trifluoromethylsulfonyl)imide; or
- 1-butyl-3-methylimidazolium tetrafluoroborate; or
- diethylmethyl(2-methoxyethyl)ammonium bis(trifluoromethylsulfonyl)imide.

In yet another preferred embodiment of the device of the invention, the selecting means comprises one or more piezoelectric, optomechanical, electrostatic, capacitive, resistive, or photothermal actuators to excite the flexural modes of the mechanical resonator sensor.

In yet another preferred embodiment of the device of the invention, the monitoring means comprises one or more photodetectors, optomechanical, electrostatic, capacitive, or resistive transducers to detect nanoscale deflections of the mechanical resonator sensor.

In yet another preferred embodiment of the device of the invention, said device further comprises laser emission means arranged in such a way that the emitted laser beam is reflected or backscattered by the mechanical resonator sensor and collected by the monitoring means.

In yet another preferred embodiment of the device of the invention, said device further comprises laser focusing means adapted for focusing the laser beam reflected or backscattered by the mechanical resonator sensor on the monitoring means.

In yet another preferred embodiment of the device of the invention, said device further comprises imaging means adapted for taking optical images of the mechanical resonator sensor and the reservoir.

In yet another preferred embodiment of the device of the invention, said device further comprises processing means configured to process an electrical signal from the monitoring means. Preferably, said processing means comprises a digital acquisition (DAQ) board or a lock-in amplifier (LIA).

A second object of the invention relates to a method for controlling mass flow in open nanofluidic systems by means of a device according to any of the embodiments herein described. Advantageously, the method comprises performing the following steps:

- loading the reservoir with a conducting liquid;
- positioning, with the positioning means, the conducting liquid loaded into the reservoir in contact with the receiving means;
- depositing a mass of conducting liquid on the receiving means by applying a voltage between the reservoir and the receiving means with the dispensing means during the period of time $\Delta t$;
- monitoring, with the monitoring means, the mechanical spectra of the mechanical resonator sensor before and after depositing the mass of conducting liquid on the receiving means;
- determining the mass of conducting liquid deposited on the receiving means from the mechanical spectra of the mechanical resonator sensor by means of the expression:

$$m_L = -\frac{2m_r \cdot \Delta\omega}{\omega}$$

wherein $m_L$ is the mass of conducting liquid deposited on the receiving means; $m_r$ and $\omega$ are the effective mass and mechanical resonance frequency of the mechanical resonator sensor before depositing the mass of conducting liquid on the receiving means, respectively; and $\Delta\omega$ is the difference between the mechanical resonance frequencies of the mechanical resonator sensor with and without the deposited mass of conducting liquid on the receiving means.

In a preferred embodiment of the method of the invention, said method further comprises a step of determining a mass flow rate of conducting liquid $\dot{m}_L$ along the receiving means by dividing the mass of conducting liquid $m_L$ by the period of time $\Delta t$.

In another preferred embodiment of the method of the invention, the voltage, in absolute value, applied by the dispensing means is below 4 V. Preferably, between 1 and 4 V and, more preferably, between 2 and 3 V.

In another preferred embodiment of the method of the invention, the conducting liquid loaded in the reservoir comprises an ionic liquid and is subject to a pressure lower than 1 atm.

A third object of the invention relates to a synthesis method of semiconductor nanowires as receiving means of a device according to any of the embodiments herein described, based on vapor-liquid-solid mechanism for single-crystal growth. Advantageously, the method comprises performing the following steps in any technically possible order:

a) providing a growth semiconductor substrate and a secondary semiconductor substrate;
b) depositing a first mass of a metal catalyst on the growth semiconductor substrate;
c) depositing a second mass of the same metal catalyst used in step b) on the secondary semiconductor substrate;

d) after steps b) and c), placing growth and secondary substrates into a chemical-vapor-deposition-chamber at a given temperature, forming a plurality of metal-semiconductor alloy droplets; and,

e) exposing the metal-semiconductor alloy droplets to a precursor gas flow, undergoing chemical vapor deposition (CVD). In this way, the precursor gas reacts and/or decomposes on the growth semiconductor substrate to produce the semiconductor nanowires.

Under the scope of interpretation of the present invention, the expression "growth semiconductor substrate" will be understood as any semiconductor substrate wherein a plurality of nanowires can be formed by following the method of the invention. Furthermore "metal catalyst" will be understood as any metal material that can act as a seed of the growth of a semiconductor nanowire.

Unlike technological approaches known in the prior art, the synthesis method of the invention allows fabricating semiconductor nanowires up to 50 $\mu$m in length with controllable tapered morphology and orientation. Tapered cross-sectional semiconductor nanowires have been ascribed to a gradual decrease of the metal-semiconductor alloy droplets diameter during the nanowire growth process due to loss of metal atoms by incorporation into semiconductor lattice, etching by a byproduct of hydrogen reduction of the precursor gas, and/or vaporization of intermediate compounds dragged by the precursor gas flow. This also implies an eventual limitation of the maximum nanowire length (20-30 $\mu$m). The method of the invention mitigates this effect by placing a secondary semiconductor substrate covered with the same metal catalyst as the growth semiconductor substrate into the CVD-chamber. Said secondary semiconductor substrate is positioned with respect to the growth semiconductor substrate in such a way that the precursor gas flow reaches first said secondary substrate. In this way, the loss of metal atoms normally produced at the growth substrate is partially compensated by the arrival of intermediate compounds created at the secondary semiconductor substrate.

In a preferred embodiment of the synthesis method of the invention, step d) is performed at a temperature comprised between 300-900°C, and more preferably between 800-900°C for 5-10 minutes.

In another preferred embodiment of the synthesis method of the invention, the metal-semiconductor alloy droplets are exposed to a precursor gas flow for 10-50 minutes in step e).

In a preferred embodiment of the synthesis method of the invention, the mass of metal catalyst deposited on the secondary semiconductor substrate in step c) comprises a higher concentration than the mass of metal catalyst deposited on the growth semiconductor substrate in step b). Preferably, the concentration of metal catalyst deposited on the secondary semiconductor substrate is between 10-20 times higher than the concentration of metal catalyst deposited on the growth semiconductor substrate.

In another preferred embodiment of the synthesis method of the invention, said method further comprises performing the following steps:

- purging the chemical-vapor-deposition-chamber with an inert gas and/or stabilizing a continuous precursor gas flow before step e); and/or
- purging the chemical-vapor-deposition-chamber with an inert gas after step e), to remove precursor gas and intermediate compounds generated during the chemical vapor deposition.

In yet another preferred embodiment of the synthesis method of the invention, the precursor gas comprises silicon tetrachloride ($SiCl_4$), a mixture of hydrogen ($H_2$) and silicon tetrachloride ($SiCl_4$), silane ($SiH_4$), disilane ($Si_2H_6$), dichlorosilane ($SiH_2Cl_2$), or any possible combination thereof.

In yet another preferred embodiment of the synthesis method of the invention, wherein the mechanical resonator sensor comprises a nanowire resonator, the growth semiconductor substrate crystal orientation is (111) to obtain nanowires aligned perpendicularly to the growth semiconductor substrate. Alternatively, if the mechanical resonator comprises a cantilever resonator attached to a nanowire, the growth semiconductor substrate crystal orientation is preferably (110) to obtain nanowires aligned with the longitudinal axis of the cantilever resonator, which is preferably oriented along a (111) crystal orientation.

In yet another preferred embodiment of the synthesis method of the invention, the growth and/or secondary semiconductor substrate/s comprise/s:

- silicon; or
- a compound from the family of III-V semiconductors; preferably, InAs, InP, GaAs, GaP, InSb, GaSb; or
- a compound from the family of III-nitrides; preferably, GaN, InN, AlN); or
- any combination thereof.

In yet another preferred embodiment of the synthesis method of the invention, the metal catalyst comprises Au, Ag, Al, Bi, Cd, Co, Cu, Dy, Fe, Ga, Gd, In, Mg, Mn, Ni, Os, Pb, Pd, Pt, Te, Ti, Zn, or any combination thereof.

In yet another preferred embodiment of the synthesis method of the invention, the step/s of depositing a first and/or a second mass of a metal catalyst on the growth and/or secondary semiconductor substrate/s comprises vaporization, spin coating, or lithography. In this way, the metal catalyst can be deposited over the surface of the growth and/or secondary semiconductor substrate/s forming a layer or as localized metal spots.

A fourth object of the invention relates to the use of a device according to any of the embodiments herein described for controlling mass flow in printing, patterning, proteomic assays, and/or chemical reactions.

## DESCRIPTION OF THE FIGURES

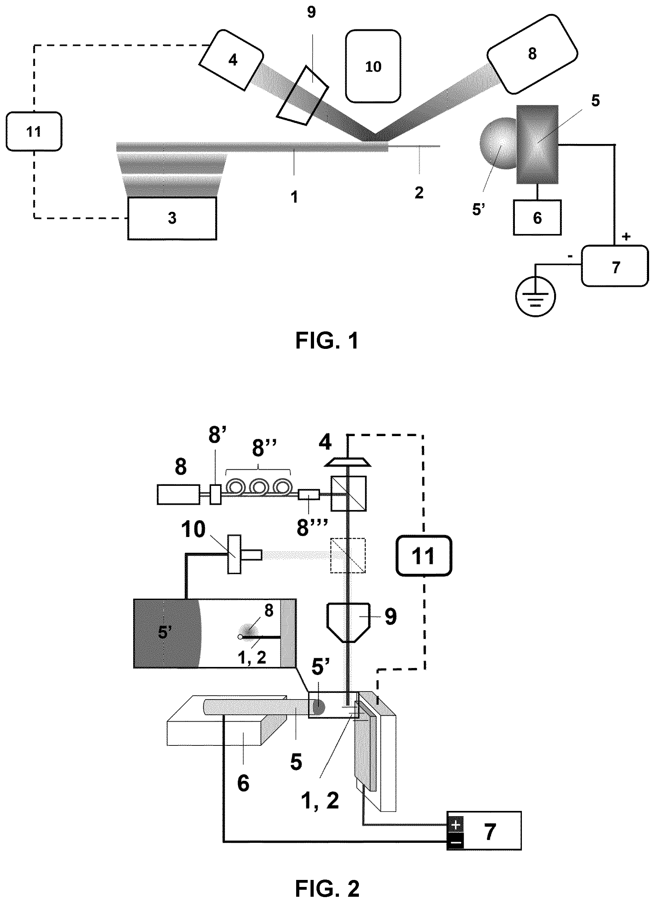

Figure 1 shows the device of the invention according to one of its preferred embodiments, comprising a cantilever resonator attached to a nanowire as mechanical resonator sensor.

Figure 2 shows the device of the invention according to another of its preferred embodiments, comprising a nanowire resonator as mechanical resonator sensor.

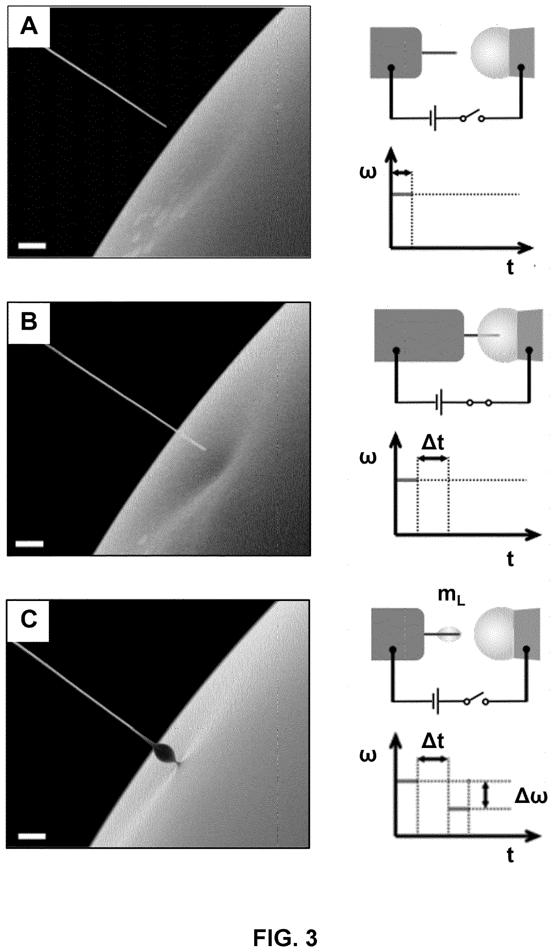

Figure 3 shows the stepwise method for controlling mass flow in open nanofluidic systems by means of the device of the invention in one of its preferred embodiments: (a) monitoring mechanical spectra of the mechanical resonator sensor before depositing a mass of conducting liquid on the receiving means; (b) positioning the receiving means in contact with the conducting liquid loaded into the reservoir and depositing a mass of conducting liquid $m_L$ on the receiving means by applying a voltage between the reservoir and the receiving means with the dispensing means; and (c) monitoring the mechanical spectra of the mechanical resonator sensor after depositing the mass of conducting liquid $m_L$ on the receiving means.

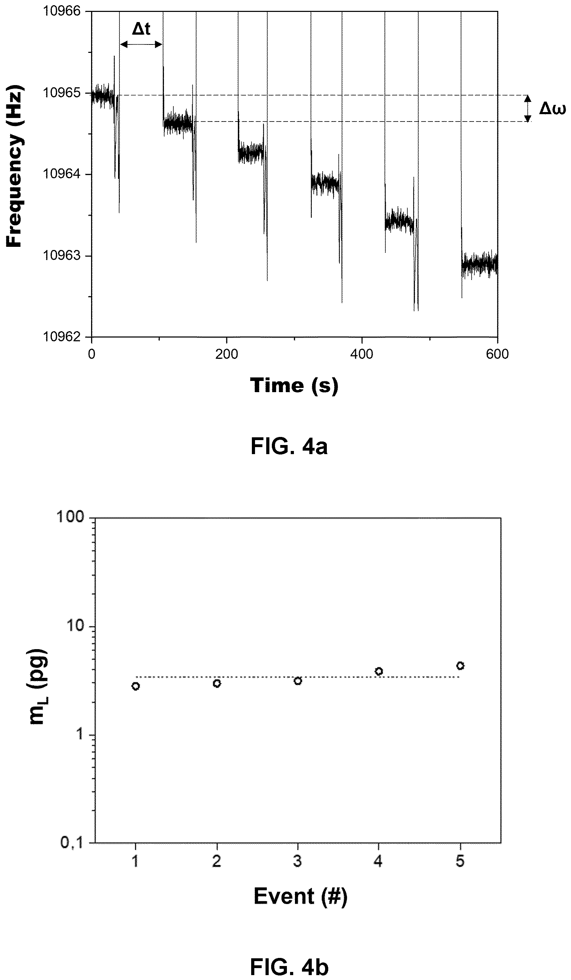

Figure 4a shows the stepwise reduction in the mechanical resonance frequency of the cantilever resonator of the device of the invention in one of its preferred embodiments during the performance of the method of the invention five consecutive times. Figure 4b shows the amount of mass of conducting liquid deposited on the nanowire during each repetition of the method of the invention. Average deposited liquid mass is represented by a dashed line.

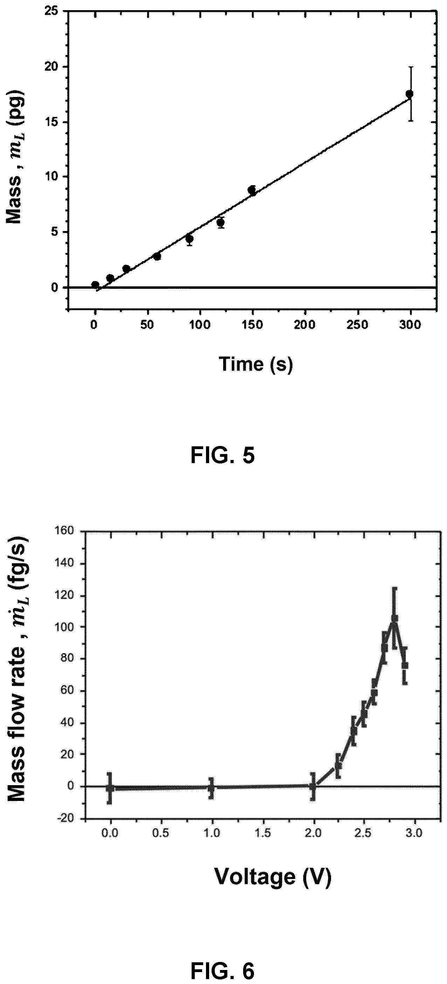

Figure 5 shows the amount of liquid mass deposited on the nanowire of the device of the invention in one of its preferred embodiments following the method of the invention as a function of the time that the conducting liquid and the nanowire are in contact and under a voltage. The mechanical resonator of the device of the invention comprises a cantilever resonator attached to a nanowire. A linear fitting of the data is included.

Figure 6 shows the liquid mass flow rate along the nanowire attached to the cantilever resonator of the device of the invention in one of its preferred embodiments depending on the voltage applied between the reservoir and the nanowire with the dispensing means during the performance of the method of the invention.

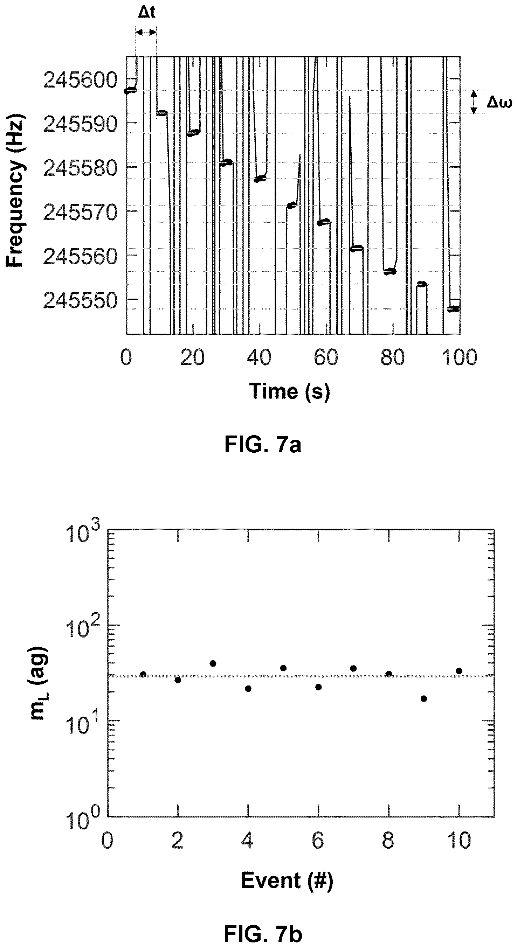

Figure 7a shows the stepwise reduction in the mechanical resonance frequency of the nanowire resonator of the device of the invention in one of its preferred embodiments during the performance of the method of the invention ten consecutive times. Figure 7b shows the amount of mass of conducting liquid deposited on the nanowire resonator during each repetition of the method of the invention. Average deposited liquid mass is represented by a dashed line.

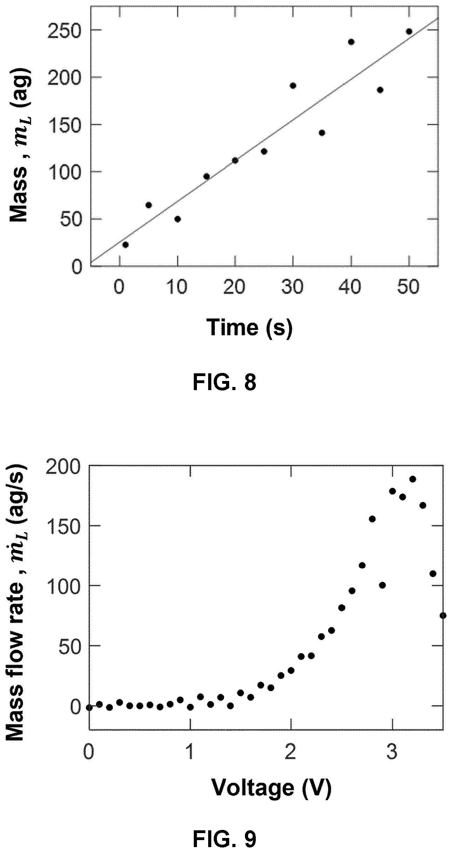

Figure 8 shows the amount of liquid mass deposited on the nanowire resonator of the device of the invention in one of its preferred embodiments following the method of the invention as a function of the time that the conducting liquid and the nanowire resonator are in contact and under a voltage. A linear fitting of the data is included.

Figure 9 shows the liquid mass flow rate along the nanowire resonator of the device of the invention in one of its preferred embodiments depending on the voltage applied between the conducting liquid and the nanowire resonator with the dispensing means during the performance of the method of the invention.

## NUMERICAL REFERENCES USED IN THE DRAWINGS

In order to provide a better understanding of the technical features of the invention, the referred Figures 1-9 are accompanied of a series of numerical references which, with an illustrative and non-limiting character, are hereby represented:

| 1 | Mechanical resonator sensor |
|------|------------------------------|
| 2 | Receiving means |
| 3 | Selecting means |
| 4 | Monitoring means |
| 5 | Reservoir |
| 5' | Conducting liquid |
| 6 | Positioning means |
| 7 | Dispensing means |
| 8 | Laser emission means |
| 8' | Variable attenuator |
| 8" | Birefringence loops |

(continued)

| 8‴ | Collimator |
|---|---|
| 9 | Laser focusing means |
| 10 | Imaging means |
| 11 | Processing means |

## DETAILED DESCRIPTION OF THE INVENTION

While aspects of the subject matter of the present disclosure may be embodied in a variety of forms, the following description and accompanying drawings are merely intended to disclose some of these forms as specific examples of the subject matter. Accordingly, the subject matter of this disclosure is not intended to be limited to the forms or embodiments so described and illustrated.

Unless defined otherwise, all terms of art, notations and other technical terms or terminology used herein have the same meaning as is commonly understood by one of ordinary skill in the art to which this disclosure belongs.

As described in preceding paragraphs, one object of the present invention relates to a nanomechanical mass flow meter and controller device for precise quantitative control of liquid transport in open nanofluidic systems. To do so, said device comprises:

- a mechanical resonator sensor (1) comprising receiving means (2) adapted for receiving a mass of conducting liquid (5') disposed thereon, wherein said mechanical resonator sensor (1) possesses at least one mechanical vibration mode selectable in one or more working frequencies;
- selecting means (3) adapted for selecting a working frequency corresponding to one mechanical vibration mode of the mechanical resonator sensor (1); and
- monitoring means (4) adapted for monitoring the mechanical spectra of the coupled system conformed by the mass of conducting liquid (5') and the mechanical resonator sensor (1).

Advantageously, the device of the invention further comprises:

- a reservoir (5) adapted for containing the mass of conducting liquid (5');
- positioning means (6) adapted for adjusting the relative position of the reservoir (5) with respect to the receiving means (2); and,
- dispensing means (7) adapted for dispensing the mass of conducting liquid (5') contained in the reservoir (5) on the receiving means (2), through the application of a voltage between the reservoir (5) and the receiving means (2).

As previously described, the expression "conducting liquid" will be herein understood as any liquid solution that contains ions, including any type of salt dissolved in water and ionic liquids.

In different embodiments of the device of the invention, the mechanical resonator sensor (1) can comprise, for instance, a cantilever resonator attached to a nanowire (see Figure 1), or a nanowire resonator (see Figure 2). In both cases, the nanowire acts as receiving means (2) and typically comprises a metal or semiconductor material and, more preferably, silicon (Si), germanium (Ge), silicon carbide (SiC), indium arsenide (InAs), indium phosphide (InP), gallium arsenide (GaAs), gallium phosphide (GaP), indium antimonide (InSb), gallium antimonide (GaSb), gallium nitride (GaN), indium nitride (InN), aluminum nitride (AlN), or any combination thereof.

The selecting means (3) comprises a piezoelectric actuator to excite the flexural modes of the mechanical resonator sensor (1). However, other actuation systems can also be employed in the context of the invention, such as optomechanical, electrostatic, capacitive, resistive or photothermal actuators.

The monitoring means (4) comprises a photodetector to detect nanoscale deflection of the mechanical resonator sensor (1). To do that, laser emission means (8), for example a fiber-coupled diode laser, emits a laser beam in such a way that said beam is reflected or backscattered by the mechanical resonator sensor (1) and focused on the photodetector (4) by laser focusing means (9), typically, a 10X objective. Said photodetector (4) can comprise a photodiode of two or four closely jointed segments, or an unsegmented photoreceiver coupled to a low noise transimpedance amplifier. However, other types of transduction systems can also be employed in the context of the invention, such as optomechanical, electrostatic, capacitive, or resistive transducers.

In a preferred embodiment of the device of the invention (see Figure 2), the power of the laser emitted by the laser emission means (8) is controlled with a variable attenuator (8'), preferably in the range from 3.6 $\mu$W to 14.4 $\mu$W, high enough to resolve the thermomechanical signal of nanowires at acquisition times equal or lower than 1 second but without inducing any observable optomechanical back-action effect. The polarization of said emitted laser beam is aligned with the longitudinal axis of the mechanical resonator sensor (1) by means of birefringence loops (8"), so that the backscattered intensity is maximize and, hence, transduction sensitivity. After this fiber stage, a triplet lens collimator (8‴) provides a nearly Gaussian free-space laser beam, with its optical axis oriented perpendicular to the longitudinal axis of the mechanical resonator sensor (1). Collimated laser beam is focused on the mechanical resonator sensor (1) using a 10X objective (9) with 0.28 numerical aperture, which results into a laser spot waist diameter of around 6 $\mu$m.

The reservoir (5) comprises a conductive support, preferably made of gold or platinum-iridium, and adapted for preferably containing one or more droplets of any of the following ionic liquids: 1,2-dimethyl-3-propylimidazolium bis(trifluoromethylsulfonyl)imide, 1-butyl-3-methylimidazolium tetrafluoroborate, or diethylmethyl(2-methoxyethyl)ammonium bis(trifluoromethylsulfonyl)imide. The relative position of said reservoir (5) with respect to the receiving means (2) is controlled by an XYZ nanopositioning stage (6).

Imaging means (10), preferably a CCD camera with white light illumination, is coupled to the mechanical resonator sensor (1) to follow in real-time the approximation of the reservoir (5) to the receiving means (2) and, optionally, the deposition of a mass of conducting liquid (5') on said means (2).

The resulting electrical signal from the photodetector (4) is then processed by processing means (11), either a digital acquisition (DAQ) board or a lock-in amplifier (LIA). LIA reference signal is delivered to the selecting means (3) in case of driven vibrations. The DAQ board is synchronized both with a waveform generator (WFG), which can also be connected to the selecting means (3), and with positioning means (6), allowing the acquisition of the signal of the photodetector as the relative mechanical resonator sensor (1)-laser beam position is scanned. Measurements can be performed in diverse environmental conditions, including, but not limited to, high vacuum (~$10^{-5}$ mbar), and at substrate temperatures of around 300 K.

A second object of the invention relates to a method for controlling mass flow in open nanofluidic systems by means of a device according to any of the embodiments herein described. Advantageously, the method comprises performing the following steps (see Figure 3):

- loading the reservoir (5) with a conducting liquid (5');
- positioning, with the positioning means (6), the conducting liquid (5') loaded into the reservoir (5) in contact with the receiving means (2) during a period of time $\Delta t$;
- depositing a mass of conducting liquid (5') on the receiving means (2) by applying a voltage between the reservoir (5) and the receiving means (2) with the dispensing means (7) during the period of time $\Delta t$;
- monitoring, with the monitoring means (4), the mechanical spectra of the mechanical resonator sensor (1) before and after depositing the mass of conducting liquid (5') on the receiving means (2);
- determining the mass of conducting liquid (5') deposited on the receiving means (2) from the mechanical spectra of the mechanical resonator sensor (1) by means of the expression:

$$m_L = -\frac{2m_r \cdot \Delta\omega}{\omega}$$

wherein $m_L$ is the mass of conducting liquid (5') deposited on the receiving means (2); $m_r$ and $\omega$ are the effective mass and mechanical resonance frequency of the mechanical resonator sensor (1) before depositing the mass of conducting liquid (5') on the receiving means (2), respectively; and $\Delta\omega$ is the difference between the mechanical resonance frequencies of the mechanical resonator sensor (1) with and without the deposited mass of conducting liquid (5') on the receiving means (2).

Additionally, said method can further comprises a step of determining a mass flow rate of conducting liquid, $\dot{m}_L$, along the receiving means (2) by dividing the mass of conducting liquid (5'), $m_L$, by the period of time $\Delta t$.

In a preferred embodiment of the method of the invention, the voltage, in absolute value, applied by the dispensing means (7) is below 4 V (both polarities can produce controllable flow). Preferably, between 1 and 4 V and, more preferably, between 2 and 3 V, both in positive and negative values. Under these voltages, conducting liquid (5') from the reservoir (5) can be made to flow steadily along the receiving means (2) with both great degree of control and high flow rate measurement sensitivity (nanowire resonator: 1-100 ag/s, in vacuum; cantilever resonator attached to a nanowire: 10-100 fg/s, at standard temperature and pressure). Below 1-2 V, depending on the characteristics of the nanowire and the conducting liquid, liquid transport to the nanowires does not occur, and above 3-4 V, chemical reactions result in nanowire etching, preventing accurate measurement and control of the mass flow rate.

In yet another preferred embodiment of the method of the invention, the conducting liquid (5') loaded in the reservoir (5) comprises an ionic liquid and is subject to a pressure lower than 1 atm. More preferably, the pressure is maintained below 1 atm during the performance of the method of the invention, for example, by introducing the device inside a vacuum chamber. Under these conditions, the ionic liquid (5') does not evaporate, allowing not only controlling the mass flow of the ionic liquid (5') in an open nanofluidic system, but also measuring analytes within that liquid (5') without degrading them (e.g., proteins).

A third object of the invention relates to a synthesis method of semiconductor nanowires as receiving means (2) of a nanomechanical mass flow meter and controller device according to any of the embodiments herein described, based on vapor-liquid-solid mechanism for single-crystal growth. Advantageously, the method comprises performing the following steps in any technically possible order:

a) providing a growth semiconductor substrate and a semiconductor secondary substrate;
b) depositing a first mass of a metal catalyst on the growth semiconductor substrate;

c) depositing a second mass of the same metal catalyst used in step b) on the secondary semiconductor substrate;

d) after steps b) and c), placing growth and secondary substrates into a chemical-vapor-deposition-chamber at a given temperature, forming a plurality of metal-semiconductor alloy droplets; and,

e) exposing the metal-semiconductor alloy droplets to a precursor gas flow, undergoing chemical vapor deposition (CVD). In this way, the precursor gas reacts and/or decomposes on the growth semiconductor substrate to produce the semiconductor nanowires.

In a preferred embodiment of the synthesis method of the invention, step d) is performed at a temperature comprised between 300-900°C, and more preferably between 800-900°C for 5-10 minutes.

In another preferred embodiment of the synthesis method of the invention, the metal-semiconductor alloy droplets are exposed to a precursor gas flow for 10-50 minutes in step e).

In yet another preferred embodiment of the invention, the precursor gas comprises silicon tetrachloride ($SiCl_4$), a mixture of hydrogen ($H_2$) and silicon tetrachloride ($SiCl_4$), silane ($SiH_4$), disilane ($Si_2H_6$), dichlorosilane ($SiH_2Cl_2$), or any possible combination thereof.

Previously to step e), the chemical-vapor-deposition-chamber is usually purged with an inert gas, and the precursor gas flow is stabilized. After step e), said chamber is usually purged again with an inert gas, not only to remove traces of the precursor gas, but also intermediate compounds generated during the chemical vapor deposition.

Steps b) and/or c) can be carried out by vaporization, spin coating, or lithography. In this way, the metal catalyst can be deposited over the surface of the growth and/or secondary semiconductor substrates forming a layer or as localized metal spots.

Unlike technological approaches known in the prior art, the method of the invention allows fabricating semiconductor nanowires up to 50 $\mu$m in length with controllable tapered morphology and orientation. Tapered cross-sectional semiconductor nanowires have been ascribed to a gradual decrease of the metal-semiconductor alloy droplets diameter during the nanowire growth process due to metal incorporation into semiconductor lattice, etching by a byproduct of hydrogen reduction of the gaseous silicon precursor, and/or metal vaporization dragged by the precursor gas flow. This also implies an eventual limitation of the maximum nanowire length (20-30 $\mu$m). The method of the invention mitigates this effect by placing a secondary semiconductor substrate covered with the same metal catalyst as the growth semiconductor substrate into the CVD-chamber. Said secondary semiconductor substrate is positioned with respect to the growth semiconductor substrate in such a way that the precursor gas flow reaches first said secondary substrate. In this way, the loss of metal atoms normally produced at the growth substrate is partially compensated by the arrival of intermediate compounds created at the secondary semiconductor substrate.

In a preferred embodiment of the invention, the mass of metal catalyst deposited on the secondary semiconductor substrate in step c) comprises a higher concentration than the mass of metal catalyst deposited on the growth semiconductor substrate in step b). Preferably, the concentration of metal catalyst deposited on the secondary semiconductor substrate is between 10-20 times higher than the concentration of metal catalyst deposited on the growth semiconductor substrate.

Preferably, the growth semiconductor substrate crystal orientation is:

- (111) for a mechanical resonator sensor (1) comprising a nanowire resonator (1,2), to obtain nanowires (2) aligned perpendicularly to the growth semiconductor substrate; or
- (110) for a mechanical resonator sensor (1) comprising a cantilever resonator attached to a nanowire (2), to obtain nanowires (2) aligned with the longitudinal axis of the cantilever resonator (1), which is preferably oriented along a (111) crystal orientation. This alignment facilitates that the cantilever resonator, the nanowire (2), and the reservoir (5) are in the same focal plane and can be recorded by the imaging means (10) at the same time.

The growth and/or secondary semiconductor substrate/s preferably comprise/s:

- silicon; or
- a compound from the family of III-V semiconductors; preferably, InAs, InP, GaAs, GaP, InSb, GaSb; or
- a compound from the family of III-nitrides; preferably, GaN, InN, AlN); or
- any combination thereof.

In yet another preferred embodiment of the invention, the mass of metal catalyst deposited on the growth and/or the secondary semiconductor substrate/s in step b) and/or c) comprises Au, Ag, Al, Bi, Cd, Co, Cu, Dy, Fe, Ga, Gd, In, Mg, Mn, Ni, Os, Pb, Pd, Pt, Te, Ti, Zn, or any combination thereof.

A fourth object of the invention relates to the use of a device according to any of the embodiments herein described for controlling mass flow in printing, patterning, proteomic assays, and/or chemical reactions.

Examples of realization

Example 1: Depositing a mass of liquid in an open nanofluidic system by means of a nanomechanical mass flow meter and controller device comprising a cantilever resonator attached to a nanowire.

This first example shows the process of depositing a mass of liquid in an open nanofluidic system by means of the device of the invention in one of its preferred embodiments following the method of the invention. Specifically, the mechanical resonator sensor (1) comprises a cantilever resonator ($m_r$= 36 ng) attached to a nanowire, said nanowire acting as receiving means (2). The conducting liquid (5') loaded into the reservoir (5) is 1,2-dimethyl-3-propylimidazolium bis(trifluoromethylsulfonyl)imide. Said process was carried out in air at 300 K.

As shown in Figure 4a, the process starts with the cantilever resonator under a mechanical resonance frequency ($\omega$) of 10965 Hz. After putting the conducting liquid (5'), loaded into the reservoir (5), in contact with the nanowire (2) by an XYZ nanopositioning stage (6), a frequency shift ($\Delta\omega$) is caused since a mass of said conducting liquid (5') is deposited on the nanowire (2) by applying a voltage of 2.7 V between said reservoir (5) and the nanowire (2) for 60 seconds ($\Delta$t) with the dispensing means (7) (see Fig. 4b). To demonstrate the reproducibility of the method of the invention, this process was repeated 4 more times, represented by the stepwise reduction in the mechanical resonance frequency of the cantilever resonator in Figure 4a. The amount of mass of conducting liquid deposited on the nanowire (2) during each repetition of the method of the invention is shown in Figure 4b (mean $\pm$ standard deviation: $m_L$ = 3.4 $\pm$ 0.6 pg).

Example 2: Liquid transport in an open nanofluidic system by means of a nanomechanical mass flow meter and controller device comprising a cantilever resonator attached to a nanowire at a constant voltage.

This second example shows the process of controlling liquid transport in an open nanofluidic system by means of the device of the invention in one of its preferred embodiments following the method of the invention. Specifically, the mechanical resonator sensor (1) comprises a cantilever resonator ($m_r$= 36 ng) attached to a nanowire, said nanowire acting as receiving means (2). The conducting liquid (5') loaded into the reservoir (5) is 1,2-dimethyl-3-propylimidazolium bis(trifluoromethylsulfonyl)imide. Said process was carried out in air at 300 K.

The process starts with the cantilever resonator (1) under a mechanical resonance frequency of 10965 Hz. After putting the conducting liquid (5'), loaded into the reservoir (5), in contact with the nanowire (2) by an XYZ nanopositioning stage (6), a frequency shift ($\Delta\omega$) is caused since a mass of said conducting liquid (5') is deposited on the nanowire (2) by applying a constant voltage of 2.7 V between the reservoir (5) and the nanowire (2) with the dispensing means (7). The amount of mass of conducting liquid (5') deposited in the nanowire (2) as a function of the time that the conducting liquid (5') and the nanowire (2) are in contact and under voltage is shown in Figure 5, obtaining a controlled mass flow rate of conducting liquid (5') $\dot{m}_L$ of 60 fg/s.

Example 3: Liquid transport in an open nanofluidic system by means of a nanomechanical mass flow meter and controller device comprising a cantilever resonator attached to a nanowire depending on applied voltage.

This third example shows liquid transport in an open nanofluidic system by means of the device of the invention in one of its preferred embodiments depending on the voltage applied by the dispensing means (7) between the reservoir (5) and the receiving means (2) of the mechanical resonator sensor (1). Specifically, the mechanical resonator sensor (1) comprises a cantilever resonator ($m_r$ = 17 ng) attached to a nanowire, said nanowire acting as receiving means (2). The conducting liquid (5') loaded into the reservoir (5) is 1,2-dimethyl-3-propylimidazolium bis(trifluoromethylsulfonyl)imide. Said process was carried out in air at 300 K.

The process starts with the cantilever resonator under a mechanical resonance frequency ($\omega$) of 6170 Hz. After putting the conducting liquid (5'), loaded into the reservoir (5), in contact with the nanowire (2) by an XYZ nanopositioning stage (6), an increasing voltage between the reservoir (5) and the nanowire (2) is applied by the dispensing means (7). As shown in Figure 6, liquid transport to the nanowire (2) does not occur below 2 V, and above 3 V approx., chemical reactions result in nanowire etching, preventing accurate measurement and control of the conducting liquid mass flow rate.

Example 4: Depositing a mass of liquid in an open nanofluidic system by means of a nanomechanical mass flow meter and controller device comprising a nanowire resonator.

This forth example shows the process of depositing a mass of liquid in an open nanofluidic system by means of the device of the invention in one of its preferred embodiments following the method of the invention. Specifically, the mechanical resonator sensor (1) comprises a nanowire resonator ($m_r$=722 fg), wherein a controlled mass of conducting liquid (5') will be deposited. The conducting liquid (5') loaded into the reservoir (5) is 1,2-dimethyl-3-propylimidazolium bis(trifluoromethylsulfonyl)imide. Said process was carried out in in high vacuum ($10^{-5}$ mbar) at a temperature of 300 K.

As shown in Figure 7a, the process starts with the nanowire resonator under a mechanical resonance frequency ($\omega$) of 245597 Hz. After putting the conducting liquid (5'), loaded into the reservoir (5), in contact with the nanowire resonator by an XYZ nanopositioning stage (6), a frequency shift ($\Delta\omega$) is caused since a mass of said conducting liquid (5') is deposited on the nanowire resonator by applying a voltage of 1.4 V between the reservoir (5) and the nanowire resonator for 5 seconds ($\Delta t$) with the dispensing means (7) (see Fig. 7b).

To demonstrate the reproducibility of the method of the invention, this process was repeated 9 more times, represented by the stepwise reduction in the mechanical resonance frequency of the nanowire resonator in Figure 7a. The amount of mass of conducting liquid (5') deposited on the nanowire resonator during each repetition of the method of the invention is shown in Figure 7b (mean $\pm$ standard deviation: $m_L$ = 29 $\pm$ 7 ag).

Example 5: Liquid transport in an open nanofluidic system by means of a nanomechanical mass flow meter and controller device comprising a nanowire resonator at a constant voltage.

This fifth example shows the process of controlling liquid transport in an open nanofluidic system by means of the device of the invention in one of its preferred embodiments following the method of the invention. Specifically, the mechanical resonator sensor (1) comprises a nanowire resonator ($m_r$= 727 fg), wherein a controlled mass of conducting liquid (5') will be deposited. The conducting liquid (5') loaded into the reservoir (5) is diethylmethyl(2-methoxyethyl)ammonium bis(trifluoromethylsulfonyl)imide. Said process was carried out in in high vacuum ($10^{-5}$ mbar) at a temperature of 300 K.

The process starts with the nanowire resonator under a mechanical resonance frequency ($\omega$) of 237342 Hz. After putting the conducting liquid (5'), loaded into the reservoir (5), in contact with the nanowire resonator by an XYZ nanopositioning stage (6), a frequency shift ($\Delta\omega$) is caused since a mass of said conducting liquid (5') is deposited on the nanowire resonator by applying a voltage of 1.4 V between the reservoir (5) and the nanowire resonator with the dispensing means (7). The amount of liquid mass deposited in the nanowire resonator as a function of the time that the conducting liquid (5') and the nanowire resonator are in contact and under voltage is shown in Figure 8, obtaining a controlled mass flow rate of conducting liquid $\dot{m}_L$ of 4.3 ag/s.

Example 6: Liquid transport in an open nanofluidic system by means of a nanomechanical mass flow meter and controller device comprising a nanowire resonator depending on applied voltage.

This sixth example shows liquid transport in an open nanofluidic system by means of the device of the invention in one of its preferred embodiments depending on the voltage applied by the dispensing means (7) between the reservoir (5) and the receiving means (2) of the mechanical resonator sensor (1). Specifically, the mechanical resonator sensor (1) comprises a nanowire resonator ($m_r$= 621 fg), wherein a controlled mass of conducting liquid (5') will be deposited. The conducting liquid (5') loaded into the reservoir (5) is diethylmethyl(2-methoxyethyl)ammonium bis(trifluoromethylsulfonyl)imide. Said process was carried out in in high vacuum ($10^{-5}$ mbar) at a temperature of 300 K.

The process starts with the nanowire resonator under a mechanical resonance frequency ($\omega$) of 228828 Hz. After putting the conducting liquid (5'), loaded into the reservoir (5), in contact with the nanowire resonator by an XYZ nanopositioning stage (6), an increasing voltage between the reservoir (5) and the nanowire resonator is applied by the dispensing means (7). As shown in Figure 9, liquid transport to the nanowire resonator does not occur below 1.4 V, and above 3 V approx., chemical reactions result in nanowire etching, preventing accurate measurement and control of the conducting liquid mass flow rate.

**Claims**

1. Nanomechanical mass flow meter and controller device comprising:

   - a mechanical resonator sensor (1) comprising receiving means (2) adapted for receiving a mass of conducting liquid (5') disposed thereon, wherein said resonator sensor (1) possesses at least one mechanical vibration mode selectable in one or more working frequencies;
   - selecting means (3) adapted for selecting a working frequency corresponding to one mechanical vibration mode of the mechanical resonator sensor (1);
   - monitoring means (4) adapted for monitoring the mechanical spectra of the coupled system conformed by the mass of conducting liquid (5') and the mechanical resonator sensor (1);

   and **characterized in that** said device further comprises:

   - a reservoir (5) adapted for containing the mass of conducting liquid (5');
   - positioning means (6) adapted for adjusting the relative position of the reservoir (5) with respect to the receiving means (2); and,
   - dispensing means (7) adapted for dispensing the mass of conducting liquid (5') contained in the reservoir (5) on the receiving means (2), through the application of a voltage between the reservoir (5) and the receiving means (2).

2. Device according to the preceding claim, wherein the mechanical resonator sensor (1) comprises a cantilever resonator attached to a nanowire, or a nanowire resonator.

3. Device according to the preceding claim, wherein the nanowire resonator or the nanowire attached to the cantilever resonator comprises a metal or a semiconductor material.

4. Device according to the preceding claim, wherein the nanowire resonator or the nanowire attached to the cantilever resonator comprises silicon, germanium, silicon carbide, indium arsenide, indium phosphide, gallium arsenide, gallium phosphide, indium antimonide, gallium antimonide, gallium nitride, indium nitride, aluminum nitride, or any combination thereof.

5. Device according to any of the preceding claims, wherein the reservoir (5) comprises a support made of a conductive material.

6. Device according to any of the preceding claims, wherein the reservoir (5) is adapted for containing one or more droplets of an ionic liquid.

7. Device according to the preceding claim, wherein the ionic liquid comprises 1,2-dimethyl-3-propylimidazolium bis(trifluoromethylsulfonyl)imide, 1-butyl-3-methylimidazolium tetrafluoroborate, or diethylmethyl(2-methoxyethyl)ammonium bis(trifluoromethylsulfonyl)imide.

8. Device according to any of the preceding claims, wherein:

   - the selecting means (3) comprises one or more piezoelectric, optomechanical, electrostatic, capacitive, resistive, or photothermal actuators; and/or
   - the monitoring means (4) comprises one or more photodetectors, or optomechanical, electrostatic, capacitive, or resistive transducers.

9. Device according to any of the preceding claims, further comprising:

   - laser emission means (8), adapted for emitting a laser beam over the mechanical resonator sensor (1) and arranged in such a way that the emitted laser beam is reflected or backscattered by the mechanical resonator sensor (1) and collected by the monitoring means (4); and/or
   - laser focusing means (9), adapted for focusing the laser beam reflected or backscattered by the mechanical resonator sensor (1) on the monitoring means (4); and/or
   - imaging means (10), adapted for taking optical images of the mechanical resonator sensor (1) and the reservoir (5).

10. Device according to any of the preceding claims, further comprising processing means (11) configured to process an electrical signal from the monitoring means (4).

11. Method for controlling mass flow in open nanofluidic systems by means of a device according to any of claims 1-10, **characterized in that** said method comprises performing the following steps:

    - loading the reservoir (5) with a conducting liquid (5');
    - positioning, with the positioning means (6), the conducting liquid (5') loaded into the reservoir (5) in contact with the receiving means (2) during a period of time $\Delta t$;
    - depositing a mass of conducting liquid (5') on the receiving means (2) by applying a voltage between the reservoir (5) and the receiving means (2) with the dispensing means (7) during the period of time $\Delta t$;
    - monitoring, with the monitoring means (4), the mechanical spectra of the mechanical resonator sensor (1) before and after depositing the mass of conducting liquid (5') on the receiving means (2);
    - determining the mass of conducting liquid (5') deposited on the receiving means (2) from the mechanical spectra of the mechanical resonator sensor (1) by means of the expression:

$$m_L = -\frac{2m_r \cdot \Delta\omega}{\omega}$$

wherein $m_L$ is the mass of conducting liquid (5') deposited on the receiving means (2); $m_r$ and $\omega$ are the effective mass and mechanical resonance frequency of the mechanical resonator sensor (1) before depositing the mass of conducting liquid (5') on the receiving means (2), respectively; and $\Delta\omega$ is the difference between the mechanical resonance frequencies of the resonator sensor (1) with and without the deposited mass of conducting liquid (5') on the receiving means (2).

12. Method according to the preceding claim, further comprising a step of determining a mass flow rate of conducting liquid, $\dot{m}_L$, along the receiving means (2) by dividing the mass of conducting liquid, $m_L$, by the period of time $\Delta t$.

13. Method according to any of claims 11-12, wherein the voltage, in absolute value, applied by the dispensing means (7) is:

    - below 4 V; or

- between 1 and 4 V; or
- between 2 and 3 V.

14. Method according to any of claims 11-13, wherein the conducting liquid (5') loaded in the reservoir (5) comprises an ionic liquid and is subject to a pressure lower than 1 atm.

15. Use of a device according to any of claims 1-10 for controlling mass flow in printing, patterning, proteomic assays, and/or chemical reactions.

**Patentansprüche**

1. Nanomechanischer Massendurchflussmesser und Steuerungsvorrichtung, Folgendes umfassend:

- einen mechanischen Resonatorsensor (1), der Aufnahmemittel (2) umfasst, das zum Aufnehmen einer darauf angeordneten Masse an leitender Flüssigkeit (5') bestimmt ist, wobei der Resonatorsensor (1) mindestens einen mechanischen Schwingungsmodus besitzt, der in einer oder mehreren Arbeitsfrequenzen wählbar ist;
- Auswahlmittel (3), das zum Auswählen einer Arbeitsfrequenz bestimmt ist, die einem mechanischen Schwingungsmodus des mechanischen Resonatorsensors (1) entspricht;
- Überwachungsmittel (4), das zum Überwachen der mechanischen Spektren des gekoppelten Systems bestimmt ist, das durch die Masse an leitender Flüssigkeit (5') und den mechanischen Resonatorsensor (1) ausgebildet wird;

und **dadurch gekennzeichnet, dass** die Vorrichtung ferner Folgendes umfasst:

- ein Reservoir (5), das zum Enthalten der Masse an leitender Flüssigkeit (5') bestimmt ist;
- Positioniermittel (6), das zum Einstellen der relativen Position des Reservoirs (5) in Bezug auf das Aufnahmemittel (2) bestimmt ist; und
- Ausgabemittel (7), das zum Ausgeben der in dem Reservoir (5) enthaltenen Masse an leitender Flüssigkeit (5') auf das Aufnahmemittel (2) durch das Anlegen einer Spannung zwischen dem Reservoir (5) und dem Aufnahmemittel (2) bestimmt ist.

2. Vorrichtung gemäß dem vorhergehenden Anspruch, wobei der mechanische Resonatorsensor (1) einen an einem Nanodraht angebrachten Ausleger-Resonator oder einen Nanodraht-Resonator umfasst.

3. Vorrichtung gemäß dem vorhergehenden Anspruch, wobei der Nanodraht-Resonator oder der an dem Ausleger-Resonator angebrachte Nanodraht ein Metall oder ein Halbleitermaterial umfasst.

4. Vorrichtung gemäß dem vorhergehenden Anspruch, wobei der Nanodraht-Resonator oder der an dem Ausleger-Resonator angebrachte Nanodraht Silizium, Germanium, Siliziumkarbid, Indiumarsenid, Indiumphosphid, Galliumarsenid, Galliumphosphid, Indiumantimonid, Galliumantimonid, Galliumnitrid, Indiumnitrid, Aluminiumnitrid oder eine beliebige Kombination davon umfasst.

5. Vorrichtung gemäß einem der vorhergehenden Ansprüche, wobei das Reservoir (5) einen Träger aus einem leitfähigen Material umfasst.

6. Vorrichtung gemäß einem der vorhergehenden Ansprüche, wobei das Reservoir (5) zum Enthalten eines oder mehrerer Tröpfchen einer ionischen Flüssigkeit bestimmt ist.

7. Vorrichtung gemäß dem vorhergehenden Anspruch, wobei die ionische Flüssigkeit 1,2-Dimethyl-3-propylimidazolium-bis(trifluormethylsulfonyl)imid, 1-Butyl-3-methylimidazolium-tetrafluoroborat oder Diethylmethyl(2-methoxyethyl)ammonium-bis(trifluormethylsulfonyl)imid umfasst.

8. Vorrichtung gemäß einem der vorhergehenden Ansprüche, wobei:

- das Auswahlmittel (3) einen oder mehrere piezoelektrische, optomechanische, elektrostatische, kapazitive, resistive oder photothermische Aktoren umfasst; und/oder
- das Überwachungsmittel (4) einen oder mehrere Photodetektoren oder optomechanische, elektrostatische, kapazitive oder resistive Wandler umfasst.

9. Vorrichtung gemäß einem der vorhergehenden Ansprüche, ferner Folgendes umfassend:

- Laserausstrahlungsmittel (8), das zum Ausstrahlen eines Laserstrahls über den mechanischen Resonatorsensor (1) bestimmt und so angeordnet ist, dass der ausgestrahlte Laserstrahl durch den mechanischen Resonatorsensor (1) reflektiert oder rückgestreut und durch das Überwachungsmittel (4) erfasst wird; und/oder
- Laserfokussierungsmittel (9), das zum Fokussieren des durch den mechanischen Resonatorsensor (1) reflektierten oder rückgestreuten Laserstrahls auf das Überwachungsmittel (4) bestimmt ist; und/oder
- Abbildungsmittel (10), das zum Aufnehmen von optischen Bildern des mechanischen Resonatorsensors (1) und des Reservoirs (5) bestimmt ist.

10. Vorrichtung gemäß einem der vorhergehenden Ansprüche, ferner umfassend Verarbeitungsmittel (11), das konfiguriert ist, um ein elektrisches Signal aus dem Überwachungsmittel (4) zu verarbeiten.

11. Verfahren zum Steuern des Massendurchflusses in offenen nanofluidischen Systemen mittels einer Vorrichtung gemäß einem der Ansprüche 1-10, **dadurch gekennzeichnet, dass** das Verfahren Durchführen der folgenden Schritte umfasst:

- Befüllen des Reservoirs (5) mit einer leitenden Flüssigkeit (5');
- Positionieren der in den Behälter (5) eingefüllten leitenden Flüssigkeit (5') mit dem Positioniermittel (6) in Kontakt mit dem Aufnahmemittel (2) während einer Zeitspanne $\Delta t$;
- Ablagern einer Masse an leitender Flüssigkeit (5') auf dem Aufnahmemittel (2) durch Anlegen einer Spannung zwischen dem Reservoir (5) und dem Aufnahmemittel (2) mit dem Ausgabemittel (7) während der Zeitspanne $\Delta t$;
- Überwachen der mechanischen Spektren des mechanischen Resonatorsensors (1) mit dem Überwachungsmittel (4) vor und nach dem Ablagern der Masse an leitender Flüssigkeit (5') auf das Aufnahmemittel (2);
- Bestimmen der auf dem Aufnahmemittel (2) abgelagerten Masse an leitender Flüssigkeit (5') aus den mechanischen Spektren des mechanischen Resonatorsensors (1) mittels des Ausdrucks:

$$m_L = -\frac{2m_r \cdot \Delta\omega}{\omega}$$

wobei $m_L$ die auf dem Aufnahmemittel (2) abgelagerte Masse an leitender Flüssigkeit (5') ist; $m_r$ und $\omega$ jeweils die effektive Masse und die mechanische Resonanzfrequenz des mechanischen Resonatorsensors (1) vor dem Ablagern der Masse an leitender Flüssigkeit (5') auf dem Aufnahmemittel (2) sind; und $\Delta\omega$ die Differenz zwischen den mechanischen Resonanzfrequenzen des Resonatorsensors (1) mit und ohne die auf dem Aufnahmemittel (2) abgelagerte Masse an leitender Flüssigkeit (5') ist.

12. Verfahren gemäß dem vorhergehenden Anspruch, ferner umfassend einen Schritt des Bestimmens einer Massendurchflussrate an leitender Flüssigkeit, $\dot{m}_L$, entlang des Aufnahmemittels (2) durch Dividieren der Masse an leitender Flüssigkeit, $ml$, durch die

Zeitspanne $\Delta t$.

13. Verfahren gemäß einem der Ansprüche 11-12, wobei die durch das Ausgabemittel (7) angelegte Spannung, in Absolutwerten:

- unter 4 V; oder
- zwischen 1 und 4 V; oder
- zwischen 2 und 3 V liegt.

14. Verfahren gemäß einem der Ansprüche 11-13, wobei die in dem Reservoir (5) eingefüllte leitende Flüssigkeit (5') eine ionische Flüssigkeit umfasst und einem Druck von weniger als 1 atm ausgesetzt ist.

15. Verwendung einer Vorrichtung gemäß einem der Ansprüche 1-10 zum Steuern des Massendurchflusses beim Drucken, Strukturieren, bei proteomischen Untersuchungen und/oder chemischen Reaktionen.

**Revendications**

1. Débitmètre massique nanomécanique et dispositif de contrôle comprenant :

- un capteur à résonateur mécanique (1) comprenant des moyens de réception (2) adaptés à la réception d'une masse de liquide conducteur (5') disposée sur celui-ci, dans lequel ledit capteur à résonateur (1) possède au moins un mode de vibration mécanique sélectionnable dans une ou plusieurs fréquences de travail ;
- des moyens de sélection (3) adaptés à la sélection d'une fréquence de travail correspondant à un mode de vibration mécanique du capteur à résonateur mécanique (1) ;
- des moyens de surveillance (4) adaptés à la surveillance des spectres mécaniques du système couplé constitué par la masse de liquide conducteur (5') et le capteur à résonateur mécanique (1) ;

et **caractérisé en ce que** ledit dispositif comprend en outre :

- un réservoir (5) adapté à contenir la masse de liquide conducteur (5') ;
- des moyens de positionnement (6) adapté à ajuster la position relative du réservoir (5) par rapport au moyen de réception (2) ; et
- des moyens de distribution (7) adapté à distribuer la masse de liquide conducteur (5') contenue dans le réservoir (5) sur le moyen de réception (2), par l'application d'une tension entre le réservoir (5) et le moyen de réception (2).

2. Dispositif selon la revendication précédente, dans lequel le capteur à résonateur mécanique (1) comprend un résonateur en porte-à-faux fixé à un nanofil, ou un résonateur à nanofil.

3. Dispositif selon la revendication précédente, dans lequel le résonateur à nanofils ou le nanofil fixé au résonateur en porte-à-faux comprend un métal ou un matériau semi-conducteur.

4. Dispositif selon la revendication précédente, dans lequel le résonateur à nanofils ou le nanofil fixé au résonateur en porte-à-faux comprend du silicium, du germanium, du carbure de silicium, de l'arséniure d'indium, du phosphure d'indium, de l'arséniure de gallium, du phosphure de gallium, de l'antimoniure d'indium, de l'antimoniure de gallium, du nitrure de gallium, du nitrure d'indium, du nitrure d'aluminium, ou une quelconque combinaison de ceux-ci.

5. Dispositif selon l'une quelconque des revendications précédentes, dans lequel le réservoir (5) comprend un support en matériau conducteur.

6. Dispositif selon l'une quelconque des revendications précédentes, dans lequel le réservoir (5) est adapté à contenir une ou plusieurs gouttelettes d'un liquide ionique.

7. Dispositif selon la revendication précédente, dans lequel le liquide ionique comprend le bis(trifluorométhylsulfonyl)imide de 1,2-diméthyl-3-propylimidazolium, le 1-butyl-3-méthylimidazolium tétrafluoroborate ou le bis(trifluorométhylsulfonyl)imide de diéthylméthyl(2-méthoxyéthyl)ammonium.

8. Dispositif selon l'une quelconque des revendications précédentes, dans lequel :

   - le moyen de sélection (3) comprend un ou plusieurs actionneurs piézoélectriques, optomécaniques, électrostatiques, capacitifs, résistifs ou photothermiques ; et/ou
   - le moyen de surveillance (4) comprend un ou plusieurs photodétecteurs, ou transducteurs optomécaniques, électrostatiques, capacitifs ou résistifs.

9. Dispositif selon l'une quelconque des revendications précédentes, comprenant en outre :

   - des moyens d'émission laser (8), adaptés à émettre un faisceau laser sur le capteur à résonateur mécanique (1) et disposés de manière à ce que le faisceau laser émis soit réfléchi ou rétrodiffusé par le capteur à résonateur mécanique (1) et recueilli par les moyens de surveillance (4) ; et/ou
- un moyen de focalisation laser (9), adapté à focaliser le faisceau laser réfléchi ou rétrodiffusé par le capteur à résonateur mécanique (1) sur le moyen de surveillance (4) ; et/ou
- des moyens d'imagerie (10), adaptés à prendre des images optiques du capteur à résonateur mécanique (1) et du réservoir (5).

10. Dispositif selon l'une quelconque des revendications précédentes, comprenant en outre des moyens de traitement (11) configurés pour traiter un signal électrique provenant des moyens de surveillance (4).

11. Procédé de contrôle du débit massique dans les systèmes nanofluidiques ouverts au moyen d'un dispositif selon l'une quelconque des revendications 1 à 10, **caractérisée en ce que** ledit procédé comprend l'exécution des étapes suivantes :

   - charger le réservoir (5) d'un liquide conducteur (5') ;
   - positionner, avec le moyen de positionnement (6), le liquide conducteur (5') chargé dans le réservoir (5) en contact avec le moyen de réception (2) pendant une période de temps $\Delta t$ ;
   - déposer une masse de liquide conducteur (5') sur le moyen de réception (2) par l'application d'une tension entre le réservoir (5) et le moyen de réception (2) avec le moyen de distribution (7) pendant la période de temps $\Delta t$ ;
   - contrôler, avec le moyen de contrôle (4), les spectres mécaniques du capteur à résonateur mécanique (1) avant et après le dépôt de la masse de liquide conducteur (5') sur le moyen de réception (2) ;
   - déterminer la masse de liquide conducteur (5') déposée sur le moyen de réception (2) à partir des spectres mécaniques du capteur à résonateur mécanique (1) au moyen de l'expression :

$$m_L = -\frac{2m_r \cdot \Delta\omega}{\omega}$$

dans lequel $m_L$ est la masse de liquide conducteur (5') déposée sur le moyen de réception (2) ; $m_r$ et $\omega$ sont respectivement la masse effective et la fréquence de résonance mécanique du capteur à résonateur mécanique (1) avant le dépôt de la masse de liquide conducteur (5') sur le moyen de réception (2) ; et $\Delta\omega$ est la différence entre les fréquences de résonance mécanique du capteur à résonateur (1) avec et sans la masse de liquide conducteur (5') déposée sur le moyen de réception (2).

**12.** Procédé selon la revendication précédente, comprenant en outre une étape consistant à déterminer un débit massique de liquide conducteur, $\dot{m}_L$, le long du moyen de réception (2) en divisant la masse de liquide conducteur, $ml$, par la période de temps $\Delta t$.

**13.** Procédé selon l'une quelconque des revendications 11 à 12, dans lequel la tension, en valeur absolue, appliquée par le moyen de distribution (7) est :

- inférieur à 4 V ; ou
- entre 1 et 4 V ; ou
- entre 2 et 3 V.

**14.** Procédé selon l'une quelconque des revendications 11 à 13, dans lequel le liquide conducteur (5') chargé dans le réservoir (5) comprend un liquide ionique et est soumis à une pression inférieure à 1 atm.

**15.** Utilisation d'un dispositif selon l'une quelconque des revendications 1 à 10 pour contrôler le débit massique dans l'impression, la structuration, les essais protéomiques et/ou des réactions chimiques.

FIG. 1

FIG. 2

FIG. 3

FIG. 4a

FIG. 4b

**FIG. 5**

**FIG. 6**

FIG. 7a

FIG. 7b

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9395343 B2

**Non-patent literature cited in the description**

- **DONG et al.** *ACS Nano*, 2013, vol. 7 (11), 10371-10379
- **TEH et al.** *Lab Chip*, 2008, vol. 8 (2), 198-220
- **ROSSI et al.** *Nano Lett.*, 2004, vol. 4 (5), 989-993
- **DUPRAT et al.** *Nature*, 2012, vol. 482 (7386), 510-513
- **HUANG et al.** *Nat. Nanotechnol.*, 2013, vol. 8 (4), 277-281
- **JU et al.** *Acc. Chem. Res.*, 2014, vol. 47 (8)
- **JU et al.** *Nat. Commun.*, 2012, vol. 3 (1), 1-6
- **WANG et al.** *ACS nano*, 2014, vol. 8 (9), 8757-8764
- **SHIN, J. H. et al.** *R. Soc. Open Sci.*, 2019, vol. 6 (2), 180657
- **HE, M. et al.** *Adv. Funct. Mater.*, 2018, vol. 28 (49), 1800187
- **HWAL SHIN, J. et al.** *Sci. Rep.*, 2015, vol. 5 (1), 1-9
- **HUANG, J. Y. et al.** *Nat. Nanotechnol.*, 2013, vol. 8 (4), 277-281
- **LI, K. et al.** *Nat. Commun.*, 2013, vol. 4 (1), 1-7